# EUROPEAN PATENT SPECIFICATION

(11) **EP 2 824 024 B1**
(45) Date of publication and mention of the grant of the patent: **30.03.2016**
(21) Application number: 14162968.3
(22) Date of filing: 31.03.2014
(51) Int. Cl.: B62K 21/12

(54) **Bicycle handlebar structure**
Fahrradlenkerstruktur
Structure de guidon de bicyclette

(30) Priority: 08.07.2013 TW 102212827
(43) Date of publication of application: 14.01.2015
(73) Proprietor: Step Solution Co., Ltd., Taichung County (TW)
(72) Inventor: Huang, Stephen, Taichung County (TW)
(74) Representative: Chaillot, Geneviève

(56) References cited:
- WO-A1-2010/139529
- FR-A1- 2 636 294

## Description

### FIELD OF THE INVENTION

The present invention relates to a bicycle handlebar structure which has two fixing members to fix at least one cable, thus prolonging service life of the at least one cable.

### BACKGROUND OF THE INVENTION

Conventional bicycle handlebar contains at least one through hole or at least one slot for accommodating at least one cable.

For example, a bicycle handlebar is disclosed in TW Utility Model No. 096214470 and contains a body, and the body includes a hollow hole and two grip portions, and each grip portion has a brake bar, wherein the body also includes a fixing portion for connecting with a front stem, and the fixing portion has a channel communicating with the through hole of the body so as to receive a brake cable. However, the body of the bicycle handlebar has the through hole defined therein, so structural reinforcement of the bicycle handlebar is reduced.

A bicycle handlebar structure is disclosed in TW Utility Model No. 086200141 and contains a body, and the body includes a slot defined on a predetermined position thereof, and a sleeve pipe fitted into a central portion of the body, wherein an outer diameter of the sleeve pipe matches with an inner diameter of a handle stem, and the sleeve pipe has a rib fixed on an inner rim thereof so as to retain with the slot of the body. Nevertheless, at least one cable is fixed in the slot, and one side of the slot is open, the at least one cable removes from the open slot easily and cannot be fixed.

Document WO 2010/139529 is considered being the closed prior art and shows the preamble of claim 1.

The present invention has arisen to mitigate and/or obviate the afore-described disadvantages.

### SUMMARY OF THE INVENTION

The primary object of the present invention is to provide a bicycle handlebar structure which has two fixing members to fix at least one cable, thus prolonging service life of the at least one cable

To obtain the above objective, a bicycle handlebar structure provided by the present invention contains: a handlebar and two fixing members.

The handlebar includes a horizontal bar and two arcuately curved grip bars extending from two sides of the horizontal bar, and a central portion of the horizontal bar connects with a handlebar stem, the horizontal bar has two slots defined on two sides of a bottom surface thereof so as to accommodate at least one cable, and each slot has an opening formed therein and two shoulders arranged on two ends of the opening. Each fixing member is in a sheet shape and includes four ribs extending outwardly from two ends of two peripheral sides thereof, and each rib has a concaved portion defined on an outer side thereof, wherein each fixing member has four concaved portions defined on four outer sides of four ribs so as to retain with the two shoulders of each slot.

Preferably, a width of the opening is less than that of each slot.

Preferably, the at least one cable is any one of a brake cable, a shifter cable and a power control cable.

Preferably, the bicycle handlebar structure further contains a locking member disposed in each slot, wherein the locking member has at least two trenches defined therein, and each of the at least two trenches is provided to accommodate each of the at least one cable, the locking member has two tabs defined on two ends of two trenches, wherein the locking member is retained in each slot, and a screwing element is inserted through each tab and connects each tab with each slot.

Preferably, each trench has two arcuately curved fringes formed on two sides thereof, and between the two arcuately curved fringes is defined a notch, wherein a width of the notch is less than that of each trench.

Thereby, the two slots are defined on the two sides of the bottom surface of the handlebar, and the two shoulders are arranged on two ends of each slot so that each cable (i.e., any one of any one of the brake cable, the shifter cable and the power control cable) is fixed in each slot, and each fixing member is covered on each slot, so that the four concaved portions of the four ribs of each fixing member retain with the two shoulders of each slot, thus fixing and hiding each cable in each slot, thereafter the adhesive tape rolls the handlebar, each fixing member and each slot so as to fix and hide the at least one cable. Thereby, the at least one cable does not remove from the opening and is fixed easily and securely. Furthermore, the handlebar, each slot, and the two shoulders are one piece formed so as to enhance structural reinforcement of the bicycle handlebar structure.

Each slot has the locking member disposed therein, and the locking member has the at least two trenches defined therein, wherein each trench is provided to accommodate each cable, thus avoiding the at least one cable winding together in each slot. Preferably, each fixing member includes the four ribs extending outwardly from the two ends of the two peripheral sides thereof so as to form four support points of each fixing member, hence each fixing member retains with each slot securely.

### BRIEF DESCRIPTION OF THE DRAWINGS

FIG 1 is a perspective view showing the assembly of a bicycle handlebar structure according to a first embodiment of the present invention.
FIG 2 is another perspective view showing the assembly of the bicycle handlebar structure according to the first embodiment of the present invention.
FIG 3 is a perspective view showing the exploded components of the bicycle handlebar structure according to the first embodiment of the present invention.
FIG 4 is a cross sectional view showing the assembly of the bicycle handlebar structure according to the first embodiment of the present invention.
FIG 5 is a perspective view showing the exploded components of a bicycle handlebar structure according to a second embodiment of the present invention.
FIG 6 an amplified perspective view showing a part of the exploded components of a bicycle handlebar structure according to a second embodiment of the present invention.
FIG. 7 a perspective view showing the installation of the bicycle handlebar structure according to the second embodiment of the present invention.
FIG 8 a cross sectional view showing the assembly of the bicycle handlebar structure according to the second embodiment of the present invention.

### DETAILED DESCRIPTION OF THE PREFERRED EMBODIMENTS

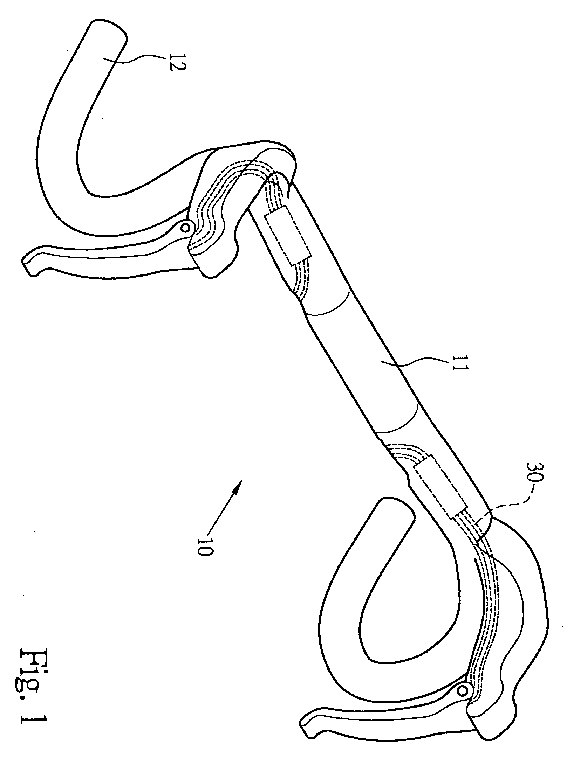

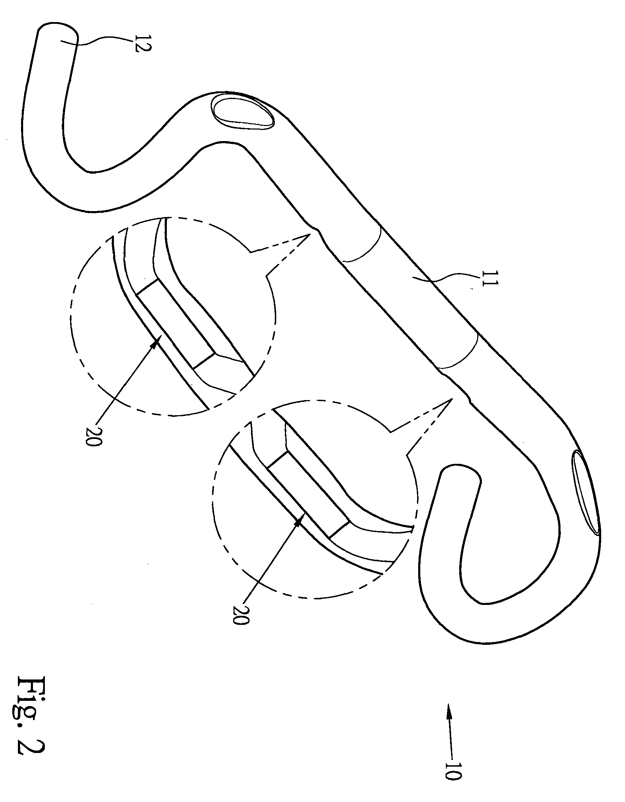

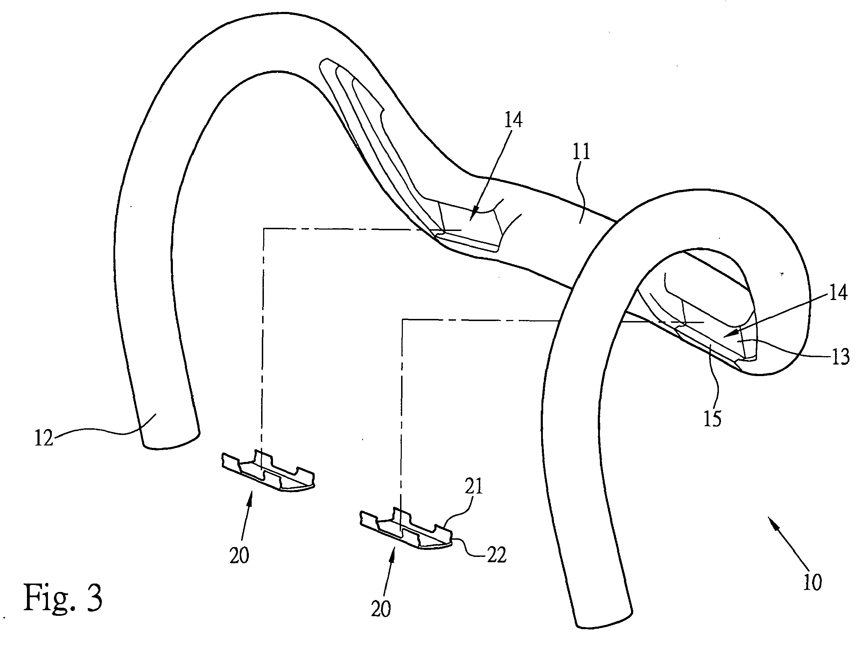

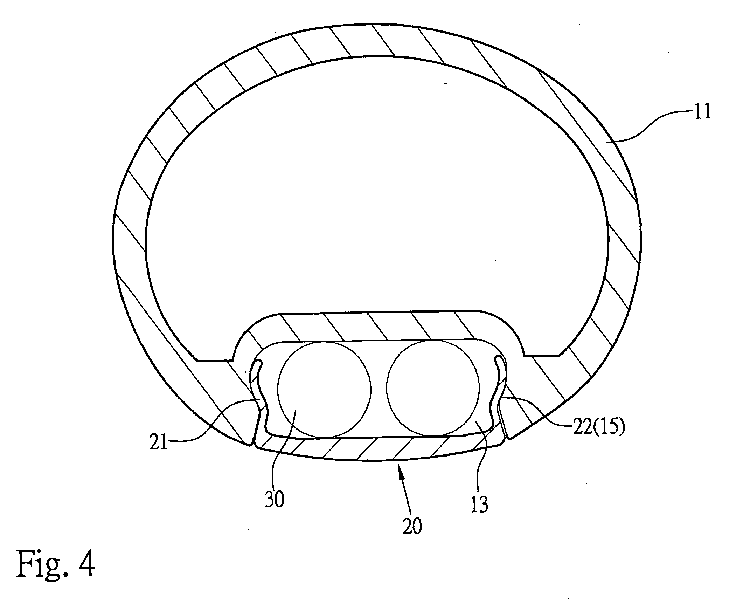

Referring further to FIGS. 1-4, a bicycle handlebar structure according to a first embodiment of the present invention comprises: a handlebar 10 and two fixing members 20.

The handlebar 10 includes a horizontal bar 11 and two arcuately curved grip bars 12 extending from two sides of the horizontal bar 11, and a central portion of the horizontal bar 11 connects with a handlebar stem, the horizontal bar 11 has two slots 13 defined on two sides of a bottom surface thereof, and each slot 13 has an opening 14 formed therein and two shoulders 15 arranged on two ends of the opening 14, wherein a width of the opening 14 is less than that of each slot 13.

Each of the two fixing members 20 is in a sheet shape and includes four ribs 21 extending outwardly from two ends of two peripheral sides thereof, and each rib 21 has a concaved portion 22 defined on an outer side thereof, wherein each fixing member 20 has four concaved portions 22 defined on four outer sides of four ribs 21 so as to correspond to the two shoulders 15 of each slot 13.

In assembly, the at least one cable 30 is inserted into each slot 13 from the handlebar stem via the opening 14, and each fixing member 20 is covered on each slot 13 so that the four concaved portions 22 of the four ribs 21 retain with the two shoulders 15 of each slot 13, thus fixing and hiding the at least one cable 30 in each slot 13; wherein the at least one cable 30 is any one of a brake cable, a shifter cable and a power control cable.

Thereby, the at least one cable 30 is fixed and hidden in each slot 13 so as to prolog service life of the at least one cable 30. In addition, each slot 13 of the handlebar 10 is one piece formed to enhance structural reinforcement.

Preferably, after the at least one cable 30 is inserted into each slot 13 of the horizontal bar 11 from the handlebar stem via the opening 14, it extends to each arcuately curved grip bar 12, and then each fixing member 20 is covered on each slot 13 so that the four concaved portions 22 of the four ribs 21 retain with the two shoulders 15 of each slot 13, and two ends of the at least one cable 30 extend out of one end of the horizontal bar 11 opposite to each slot 13 so as to connect with other components of bicycle, thereafter an adhesive tape rolls the handlebar 10, each fixing member 20, each slot 13 so as to fix and hidden the at least one cable 30.

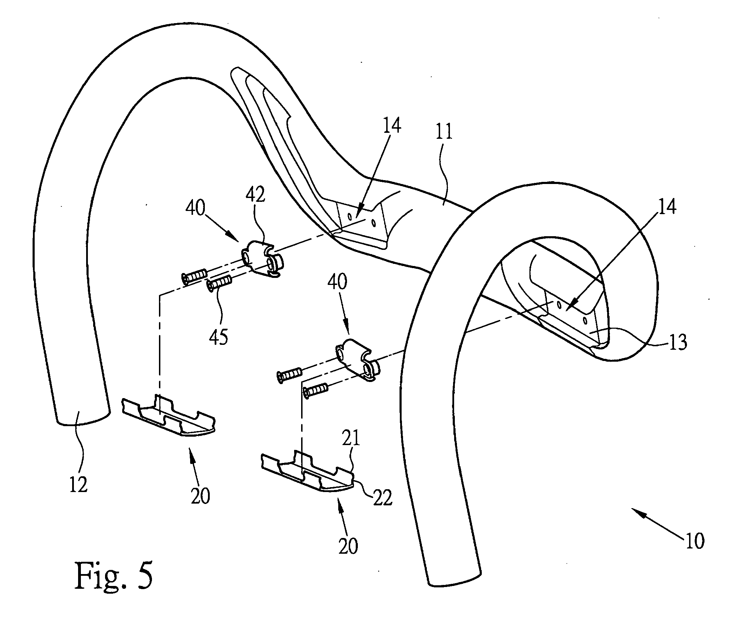

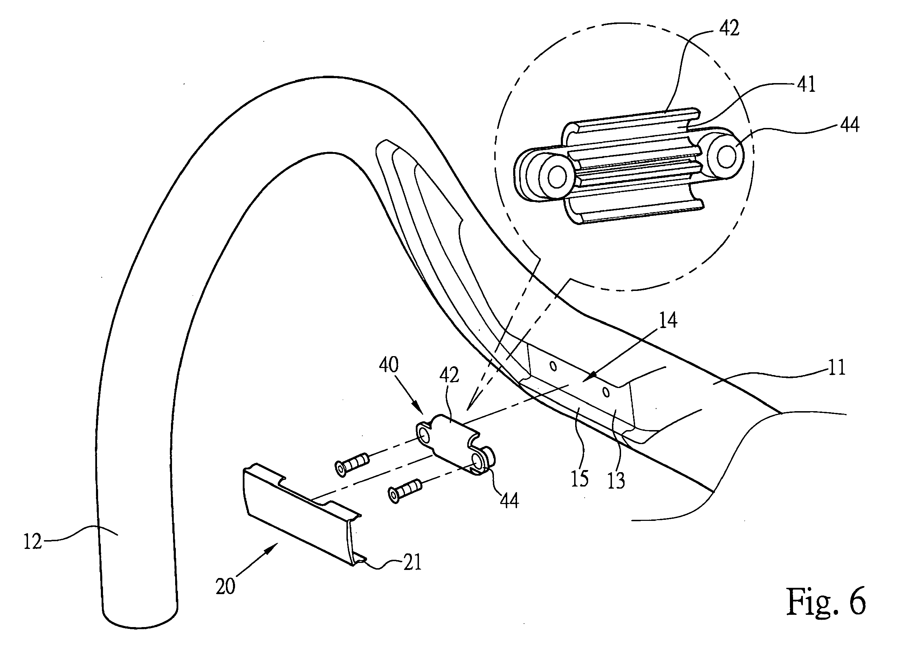

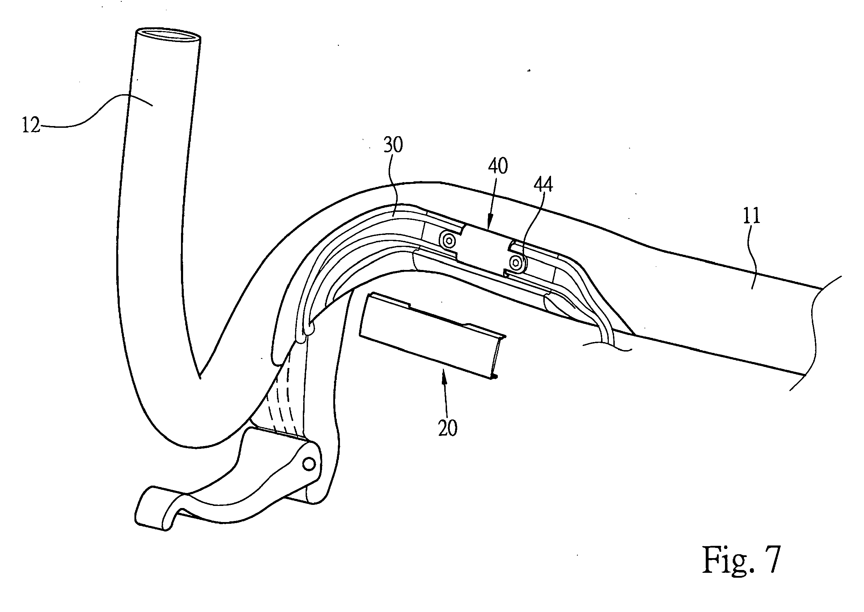

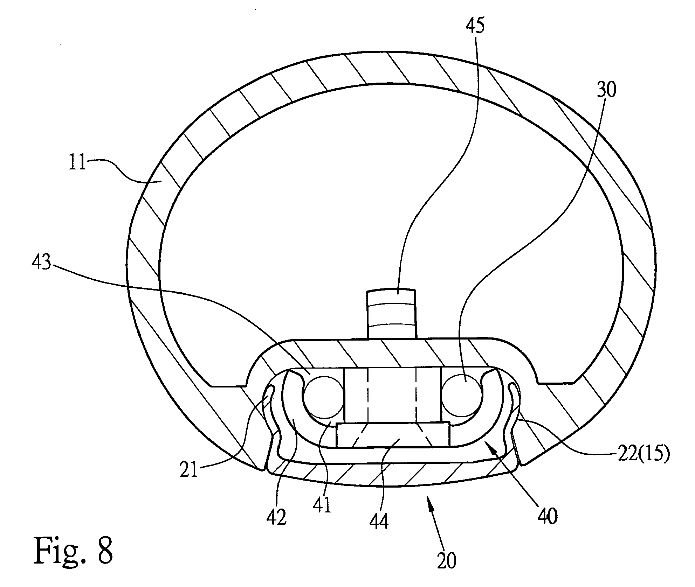

With reference to FIGS. 5-8, a difference of a bicycle handlebar structure of a second embodiment from that of the first embodiment comprises: two slots 13 defined on two sides of a bottom surface of a horizontal bar 11, and each slot 13 has a locking member 40 disposed therein, wherein the locking member 40 has at least two trenches 41 defined therein, and each trench 41 has two arcuately curved fringes 42 formed on two sides thereof, between the two arcuately curved fringes 42 is defined a notch 43, wherein a width of the notch 43 is less than that of each trench 41, and the locking member 40 has two tabs 44 defined on two ends of two trenches 41, wherein the locking member 40 is retained in each slot 13, and a screwing element 45 is inserted through each tab 44 and connects each tab 44 with each slot 13, such that each of the at least one cable 30 is inserted into each trench 41 from the notch 43 and does not remove from the notch 43, so each cable 30 is fixed in each trench 41, and each fixing member 20 is covered on each slot 13 to protect each cable 30.

Thereby, the two slots 13 are defined on the two sides of the bottom surface of the handlebar 10, and the two shoulders 15 are arranged on two ends of each slot 13 so that each cable 30 (i.e., any one of any one of the brake cable, the shifter cable and the power control cable) is fixed in each slot 13, and each fixing member 20 is covered on each slot 13, so that the four concaved portions 22 of the four ribs 21 of each fixing member 20 retain with the two shoulders 15 of each slot 13, thus fixing and hiding each cable 30 in each slot 13, thereafter the adhesive tape rolls the handlebar 10, each fixing member 20 and each slot 13 so as to fix and hide the at least one cable 30. Thereby, the at least one cable 30 does not remove from the opening 14 and is fixed easily and securely. Furthermore, the handlebar 10, each slot 13, and the two shoulders 15 are one piece formed so as to enhance structural reinforcement of the bicycle handlebar structure.

Each slot 13 has the locking member 40 disposed therein, and the locking member 40 has the at least two trenches 41 defined therein, wherein each trench 41 is provided to accommodate each cable 30, thus avoiding the at least one cable 30 winding together in each slot 13. Preferably, each fixing member 20 includes the four ribs 21 extending outwardly from the two ends of the two peripheral sides thereof so as to form four support points of each fixing member 20, hence each fixing member 20 retains with each slot 13 securely.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the scope of the invention.

## Claims

1. A bicycle handlebar structure comprising:
a handlebar (10) including a horizontal bar (11) and two arcuately curved grip bars (12) extending from two sides of the horizontal bar (11), any a central portion of the horizontal bar (11) connectine with a handlebar stem, the horizontal bar (11) having two slots (13) defined on two sides of a bottom surface thereof so as to accommodate at least one cable, and each slot (13) having an opening (14) formed therein and two shoulders (15) arranged on two ends of the opening (14);
two fixing members (20) **characterised in that** each fixing member (20) being in a sheet shape and including four ribs (21) extending outwardly from two ends of two peripheral sides thereof, and each rib (21) has a concaved portion (22) defined on an outer side thereof, wherein each fixing member (20) has four concaved portions (21) defined on four outer sides of four ribs (21) so as to retain with the two shoulders (15) of each slot (13).

2. The bicycle handlebar structure as claimed in claim 1, wherein a width of the opening is less than that of each slot (13).

3. The bicycle handlebar structure as claimed in claim 1, wherein the at least one cable (30) is any one of a brake cable, a shifter cable and a power control cable.

4. The bicycle handlebar structure as claimed in claim 1 further comprising a locking member disposed in each slot, wherein the locking member (40) has at least two trenches (41) defined therein, and each of the at least two trenches (41) provided to accommodate each of the at least one cable (30), the locking member (40) has two tabs (44) defined on two ends of two trenches (41), wherein the locking member (40) is retained in each slot (13), and a screwing element is inserted through each tab and connects each tab with each slot (13).

5. The bicycle handlebar structure as claimed in claim 4, wherein each trench (41) has two arcuately curved fringes (42) formed on two sides thereof, and between the two arcuately curved fringes (42) is defined a notch (43), wherein a width of the notch (43) is less than that of each trench (41).

## Patentansprüche

1. Fahrradlenkerstruktur, umfassend:
einen Lenker (10), der eine waagerechte Stange (11) und zwei bogenförmig gebogene Griffstangen (12), die von zwei Seiten der waagerechten Stange (11) aus verlaufen, und einen mittigen Abschnitt der waagerechten Stange (11) aufweist, der mit einem Lenkervorbau verbunden wird, wobei die waagerechte Stange (11) zwei Schlitze (13) aufweist, die auf zwei Seiten einer unteren Fläche davon zum Aufnehmen wenigstens eines Seilzugs definiert sind, und wobei jeder Schlitz (13) eine darin ausgebildete Öffnung (14) und zwei Absätze (15) aufweist, die an zwei Enden der Öffnung (14) angeordnet sind;
zwei Befestigungselemente (20), **dadurch gekennzeichnet, dass** jedes Befestigungselement (20) eine Flächenform aufweist und vier Rippen (21) aufweist, die von zwei Enden von zwei Umfangsseiten davon aus nach außen verlaufen, und jede Rippe (21) einen konkaven Abschnitt (22) aufweist, der an einer Außenseite davon festgelegt ist, wobei jedes Befestigungselement (20) vier konkave Abschnitte (21) aufweist, die an vier Außenseiten von vier Rippen (21) definiert sind, damit sie bei den beiden Absätzen (15) jedes Schlitzes (13) halten.

2. Fahrradlenkerstruktur nach Anspruch 1, wobei eine Breite der Öffnung kleiner ist als die jedes Schlitzes (13) .

3. Fahrradlenkerstruktur nach Anspruch 1, wobei der mindestens eine Seilzug (30) beliebig ein Bremszug, ein Schaltzug oder ein Steuerseil ist.

4. Fahrradlenkerstruktur nach Anspruch 1, ferner umfassend ein Feststellelement, das in jedem Schlitz angeordnet ist, wobei das Feststellelement (40) mindestens zwei darin festgelegte Kanäle (41) aufweist und jeder von den mindestens zwei Kanälen (41) so angeordnet ist, dass er jeden von dem mindestens einen Seilzug (30) aufnimmt, wobei das Feststellelement (40) zwei Laschen (44) aufweist, die an zwei Enden von zwei Kanälen (41) festgelegt sind, das Feststellelement (40) in jedem Schlitz (13) gehalten ist, und ein Schraubelement durch jede Lasche gesteckt ist und jede Lasche mit jedem Schlitz (13) verbindet.

5. Fahrradlenkerstruktur nach Anspruch 4, wobei jeder Kanal (41) zwei bogenförmig gebogene Ränder (42) aufweist, die auf zwei Seiten davon geformt sind, und zwischen den beiden bogenförmig gebogenen Rändern (42) eine Aussparung (43) festgelegt ist, wobei eine Breite der Aussparung (43) kleiner ist als die jedes Kanals (41).

## Revendications

1. Structure de guidon de bicyclette comprenant :
un guidon (10) comprenant une barre horizontale (11) et deux barres de préhension incurvées en forme d'arc (12) s'étendant à partir des deux côtés de la barre horizontale (11), et une partie centrale de la barre horizontale (11) reliée à une tige de guidon, la barre horizontale (11) ayant deux fentes (13) définies dans deux côtés d'une surface inférieure de celle-ci de façon à recevoir au moins un câble, et chaque fente (13) ayant une ouverture (14) formée dans celle-ci et deux épaulements (15) disposés sur deux extrémités de l'ouverture (14) ;
deux éléments de fixation (20), **caractérisée par le fait que** chaque élément de fixation (20) est en forme de feuille et comprend quatre nervures (24) s'étendant vers l'extérieur à partir de deux extrémités de deux côtés périphériques de celui-ci, et chaque nervure (21) a une partie concave (22) définie sur un côté externe de celle-ci, chaque élément de fixation (20) ayant quatre parties concaves (22) définies sur quatre côtés externes de quatre nervures (21) de façon à retenir les deux épaulements (15) de chaque fente (13).

2. Structure de guidon de bicyclette selon la revendication 1, dans laquelle une largeur de l'ouverture est inférieure à celle de chaque fente (13).

3. Structure de guidon de bicyclette selon la revendication 1, dans laquelle l'au moins un câble (30) est l'un quelconque parmi un câble de frein, un câble de levier de vitesse et un câble de commande de puissance.

4. Structure de guidon de bicyclette selon la revendication 1, comprenant en outre un élément de verrouillage disposé dans chaque fente, l'élément de verrouillage (40) ayant au moins deux tranchées (41) définies dans celui-ci, et chacune des au moins deux tranchées (41) est disposée pour recevoir chacun de l'au moins un câble (30), l'élément de verrouillage (40) a deux pattes (44) définies sur deux extrémités de deux tranchées (41), l'élément de verrouillage (40) étant retenu dans chaque fente (13), et un élément de vissage est introduit à travers chaque patte et relie chaque patte à chaque fente (13) .

5. Structure de guidon de bicyclette selon la revendication 4, dans laquelle chaque tranchée (41) a deux bordures incurvées en forme d'arc (42) formées sur deux côtés de celle-ci, et une encoche (43) est définie entre les deux bordures incurvées en forme d'arc (42), une largeur de l'encoche (43) étant inférieure à celle de chaque tranchée (41).
